# EUROPEAN PATENT SPECIFICATION

(11) **EP 4 589 484 B1**
(45) Date of publication and mention of the grant of the patent: **02.12.2026**
(21) Application number: 25175802.5
(22) Date of filing: 13.10.2020
(51) Int. Cl.: G06F 21/62, G06F 16/176, G06F 16/73, H04W 48/02, G06F 21/10, H04L 9/40, H04W 12/08, G06F 21/60, G06N 5/01, G06N 5/04

(54) **SYSTEMS AND METHODS FOR SECURE POLICIES-BASED INFORMATION GOVERNANCE**
SYSTEME UND VERFAHREN ZUR SICHEREN RICHTLINIENBASIERTEN INFORMATIONSVERWALTUNG
SYSTÈMES ET PROCÉDÉS DE GOUVERNANCE D'INFORMATIONS BASÉE SUR DES POLITIQUES SÉCURISÉES

(30) Priority: 18.10.2019 US 201962923381 P; 12.10.2020 US 202017068702
(43) Date of publication of application: 23.07.2025
(62) Document number(s) of the earlier application(s) in accordance with Art. 76 EPC: 20875838.3 / 4 046 046
(73) Proprietor: Rocket Software Technologies, Inc., Waltham, MA 02451 (US)
(72) Inventor: BALAN, Sudhi, Waltham, MA 02451 (US); BAIAD, Randy, Waltham, MA 02451 (US); RUSSELL, Robert, Waltham, MA 02451 (US)
(74) Representative: Käck, Stefan

(56) References cited:
- US-A1- 2015 172 320
- US-A1- 2015 269 383
- US-A1- 2015 286 969
- US-A1- 2016 232 370

## Description

### FIELD OF THE TECHNOLOGY

Embodiments of the disclosure relate to information governance. In particular, the present disclosure relates to systems and methods for secure policies-based information governance.

### BACKGROUND

U.S. Patent Application Publication No. US 2016/0232370 A1 describes that an attribute-based access control (ABAC) policy governs the behaviour of an access control mechanism in a computer system which selectively permits and denies access to resources in the system. An administrator interface includes graphical elements that are responsive to user manipulation in such manner as allow the ABAC policy to be inspected and/or edited. In an online editing mode, a user's manipulations of the graphical representation have a direct effect on the behaviour of the access control mechanism.

U.S. Patent Application Publication No. US 2015/0172320 A1 relates to methods and systems which provide access control and access control enforcement particularly in relation to business process data streams. For example, a method for controlling access to a stream of data is disclosed. The method includes the steps of: storing a plurality of policies each defining access rights related to a user and having a filter associated with it; continuously, for each new data element, checking whether said data element can be accessed under each of said policies; updating the filter associated with each policy to either permit or prevent access to said data element in accordance with said policy; and applying the updated filters to the incoming stream of data to generate a plurality of data stores, each based on one of said policies, receiving a query from a user relating to the data and returning the results of said query to the user based only on data in the respective data store such that the user is only able to access data permitted by the policy associated with the user.

In U.S. Patent Application Publication No. US 2015/0269383 A1, a system and method for managing implementation of policies in an information technologies system receives at least one policy function, at least one refinement template and at least one available policy function from the at least one memory, receives a policy input indicating a high-level policy for the IT system where the policy input is compliant with the at least one policy function and is received in a format that is not machine-enforceable at an enforcement entity of the IT system, based on the received policy input, automatically or semi-automatically generates a machine-enforceable rule and/or configuration by filling the at least one refinement template, where the machine-enforceable rule and/or configuration includes the at least one available policy function and being compliant with the received policy input, and distributes the machine-enforceable rule and/or configuration to the at least one memory of the IT system or another at least one memory to thereby enable implementation of the policies.

### SUMMARY OF THE INVENTION

The invention is defined in the independent claims. Particular embodiments are set out in the dependent claims.

The present disclosure is directed to a system of one or more computers which can be configured to perform particular operations or actions by virtue of having software, firmware, hardware, or a combination thereof installed on the system that in operation causes or cause the system to perform actions and/or method steps as described herein.

For example, the present technology is directed to systems and methods for secure policies-based information governance. An exemplary method includes: displaying a Graphical User Interface (GUI), the graphical user interface receiving a business rule input from a business user; receiving a policy from a policy engine based on the business rule input, the policy engine generating a policy hierarchy; defining a plurality of domain objects and a plurality of domain object representations in the Graphical User Interface (GUI) based on the policy and the policy hierarchy; defining an extensible hierarchical domain model definition using the policy hierarchy, the extensible hierarchical domain model definition being modified using the plurality of domain object representations in the Graphical User Interface (GUI); defining a Policy Enforcement Point (PEP) in an application based on the extensible hierarchical domain model definition; providing a mapping from the Policy Enforcement Point (PEP) in the application to the plurality of domain object representations in the Graphical User Interface (GUI); receiving, by the Policy Enforcement Point (PEP), a user request to access a resource on the application, the user request comprising attributes of the user; sending, by the Policy Enforcement Point (PEP), the user request to access the resource on the application to a Policy Decision Point (PDP); evaluating, by the Policy Decision Point (PDP), the user request to access the resource on the application, the evaluating using the extensible hierarchical domain model definition; generating, by the Policy Decision Point (PDP), a decision regarding the user request to access the resource on the application based on the evaluating; and enforcing, by the Policy Enforcement Point (PEP), the decision regarding the user request to access the resource on the application.

The evaluating, by the Policy Decision Point (PDP), the user request to access the resource may further comprise: sending, by the Policy Decision Point (PDP), an attribute evaluation request regarding the attributes of the user to a Policy Information Point (PIP); evaluating, using the Policy Information Point (PIP), the attributes of the user, the evaluating using the extensible hierarchical domain model definition; and replying, by the Policy Information Point (PIP), to the attribute evaluation request based on the evaluating, using the Policy Information Point (PIP), of the attributes of the user.

Using the Policy Information Point (PIP), the attributes of the user may comprise using at least one of a decision model template, a decision table template, and a domain.

The evaluating, using the Policy Information Point (PIP), the attributes of the user may comprise using the decision table template. The decision table template may comprise: information for presenting the decision table template to the business user using the Graphical User Interface (GUI); attributes of the plurality of domain objects; and formatting of the attributes of the plurality of domain objects for displaying on the Graphical User Interface (GUI).

The method may further include generating a custom domain model; wherein the evaluating, using the Policy Information Point (PIP), the attributes of the user comprises using the custom domain model.

The graphical user interface may further comprise a policy designer screen for the business user, the policy designer screen receiving a disable policy enforcement point input, the disable policy enforcement point input disabling the Policy Enforcement Point (PEP) preventing the Policy Enforcement Point (PEP) from enforcing the policy.

The graphical user interface may further comprise policy designer screen for the business user, the policy designer screen receiving an enable policy enforcement point input, the enable policy enforcement point input enabling the Policy Enforcement Point (PEP) allowing the Policy Enforcement Point (PEP) to enforce the policy.

In some examples the decision regarding the user request to access the resource on the application is to deny access to the resource based on the policy; and the enforcing, by the Policy Enforcement Point (PEP), the decision regarding the user request to access the resource is denying access to the resource on the application.

In some examples the decision regarding the user request to access the resource on the application is to grant access to the resource based on the policy; and the enforcing, by the Policy Enforcement Point (PEP), the decision regarding the user request to access the resource on the application is granting access to the resource on the application.

### BRIEF DESCRIPTION OF THE DRAWINGS

The accompanying drawings, where like reference numerals refer to identical or functionally similar elements throughout the separate views, together with the detailed description below, are incorporated in and form part of the specification, and serve to further illustrate embodiments of concepts that include the claimed disclosure, and explain various principles and advantages of those embodiments. The accompanying drawings, where like reference numerals refer to identical or functionally similar elements throughout the separate views, together with the detailed description below, are incorporated in and form part of the specification, and serve to further illustrate embodiments of concepts that include the claimed disclosure, and explain various principles and advantages of those embodiments.
FIG. 1 illustrates an environment within which methods and systems for secure policies-based information governance may be practiced, according to exemplary embodiments of the present technology.
FIG. 2 illustrates a pictorial diagram of a policy lifecycle for secure policies-based information governance, according to exemplary embodiments of the present technology.
FIG. 3 illustrates another pictorial diagram of an extensible hierarchical domain model for secure policies-based information governance, according to exemplary embodiments of the present technology.
FIG. 4 illustrates process flow diagram showing a method for secure policies-based information governance, in accordance with various embodiments of the present technology.
FIG. 5 illustrates a Graphical User Interface (GUI) showing a dashboard including policy groups for secure policies-based information governance, in accordance with various embodiments of the present technology.
FIG. 6 illustrates a Graphical User Interface (GUI) (e.g., Graphical User Interface (GUI) 150) showing a subject heading of policy groups, sub-heading access control of reports including a table of policies comprising a policy hierarchy for secure policies-based information governance, in accordance with various embodiments of the present technology.
FIG. 7 illustrates a Graphical User Interface (GUI) showing two selected business rules of a table of business rules comprising a policy hierarchy for secure policies-based information governance, after a user selects the subject heading of policy groups, sub-heading access control of reports of FIG. 6, in accordance with various embodiments of the present technology.
FIG. 8 illustrates a Graphical User Interface (GUI) (e.g., Graphical User Interface (GUI) 150) showing two selected policies including a description of a table of policies comprising a policy hierarchy and a policy description for secure policies-based information governance, in accordance with various embodiments of the present technology.
FIG. 9 illustrates a Graphical User Interface (GUI) (e.g., Graphical User Interface (GUI) 150) showing two business rules of a table of policies comprising a policy hierarchy have been deleted successfully for secure policies-based information governance in accordance with various embodiments of the present technology.
FIG. 10 illustrates a Graphical User Interface (GUI) showing adding a business rule to a table of policies comprising a policy hierarchy for secure policies-based information governance in accordance with various embodiments of the present technology.
FIG. 11 illustrates a Graphical User Interface (GUI) showing adding access controls to the business rule for secure policies-based information governance in accordance with various embodiments of the present technology.
FIG. 12 illustrates a Graphical User Interface (GUI) showing adding policy hierarchy data to a policy of a table of policies comprising a policy hierarchy for secure policies-based information governance in accordance with various embodiments of the present technology.
FIG. 13 illustrates a Graphical User Interface (GUI) shows the enabling of a user to test a business rule input for secure policies-based information governance in accordance with various embodiments of the present technology.
FIG. 14 illustrates a Graphical User Interface (GUI) (e.g., Graphical User Interface (GUI) 150) showing the enabling of a user to save a business rule after testing for secure policies-based information governance in accordance with various embodiments of the present technology.
FIG. 15 illustrates a Graphical User Interface (GUI) showing a policy designer screen including hierarchy data to a policy for secure policies-based information governance in accordance with various embodiments of the present technology.
FIG. 16 illustrates a pictorial diagram of policy artifacts for secure policies-based information governance, according to exemplary embodiments of the present technology.
FIG. 17 illustrates an exemplary computer system that may be used to implement embodiments of the present disclosure.

### DETAILED DESCRIPTION

In the following description, for purposes of explanation, numerous specific details are set forth in order to provide a thorough understanding of the disclosure. It will be apparent, however, to one skilled in the art, that the disclosure may be practiced without these specific details. In other instances, structures and devices may be shown in block diagram form only in order to avoid obscuring the disclosure. It should be understood, that the disclosed embodiments are merely exemplary of the invention, which may be embodied in multiple forms. Those details disclosed herein are not to be interpreted in any form as limiting, but as the basis for the claims.

Business applications and processes are intended to enforce the policies of the business they serve. These definitions are often implicit, deeply embedded in applications and require specialized knowledge to change. This makes it expensive and time consuming to adapt digital enforced policies to the changing needs of the enterprise. A traditional response to this is to adopt business rules but these suffer from the same flaws, requiring specialized knowledge to change and over time result the business rules themselves evolve into complex and brittle repositories that are hard to maintain. Embodiments of the present technology enable modern, transparent and extensible systems and methods that improve the speed, costs, and ubiquity of policy definition, access, and enforcement.

Embodiments of the present technology externalize the behavior of applications and processes into policies that are designed in a business user friendly Graphical User Interface (GUI). A policy may be defined as a set of rules. For example, a security policy designates security controls of an organization, without specifying technologies, as well as offering directives on acceptable and unacceptable actions to protect critical assets. Policy operation may be defined as actions on a domain model that represents the application and objects of the application. Policy application is made ubiquitous by automatic invocation of policy enforcement at all application interfaces, while retaining the ability to reuse policy objects in additional ad-hoc Policy Enforcement Points (PEPs) as warranted by the needs of the business. A Policy Enforcement Point (PEP) is a piece of network or security equipment that controls user access to a resource on an application and ensures an authorization decision made by a Policy Decision Point (PDP) is enforced. For example, a decision model may identify a decision tables whose rules are applied at a Policy Enforcement Point (PEP).

In some network access protection implementations, the PDP is a wired switch or wireless access point, and the like. In some instances, the PDP is a firewall, intrusion prevention system (IPS), server, or inline appliance. Depending on the implementation, the PEP and PDP can either be standalone devices or consolidated into a single device.

In various embodiments of the present technology, policies are a reusable encapsulation of the decision-making process. Policies may be defined using a policy specification language, which may be specified with interfaces that allow varying tradeoffs between complexity, power, and ease of use for users (e.g. business users). For example, simple visual design Graphical User Interfaces (GUIs), allow business users to define or customize policies without knowing details of the policy definition language. More complex GUIs may be used by technical savvy users to define policies that require precise knowledge of the policy language specification. All policies regardless of how they are defined, may be used for enforcement in any number of contexts including application interfaces, User Interface (UI) elements, and business processes, allowing a business user to define or modify a policy and have the policy apply ubiquitously on all applicable Policy Enforcement Points (PEPs), permitting scalable governance, and rapid response to changing business needs.

In some embodiments of the present technology, policies may take into consideration factors both intrinsic to the applications in question (e.g., the operation being requested, and the identity of the user requesting the operation) as well as broad general criteria external to the particular Policy Enforcement Point (PEP) (e.g. the current value of the company stock price). Policies are designed by specifying the interactions between the various factors and the resulting outcome. The collection of factors considered in the operation of a policy is the domain model of the application. Domain models provide a consistent and reusable definition of application attributes that can be reused across multiple policies and Policy Enforcement Points (PEPs). Defining domain models consistently across multiple applications is a significant challenge in policy application. This problem is solved by embodiments of the present technology by defining an extensible hierarchical domain model definition that may be modified by simple configuration. Thus, defining an extensible hierarchical domain model definition that may be modified by simple configuration permits an ecosystem where multiple co-operating applications and partners can collaborate to deliver a comprehensive domain model that can be used in policy making allowing rapid iteration of policies to deal with changing business requirements by non-technical personnel without specialized knowledge. A comprehensive versioning mechanism allows multiple versions of a policy and domain model to co-exist allowing for an ordered transition between evolving business requirements.

Various embodiments of the present technology enable ubiquitous deployment of policy across all applicable Policy Enforcement Points (PEPs) necessitating strong access controls to allow varying degrees of flexibility and authority at different levels of an organization. The policy engine introduces the concept of policy hierarchy that allows precedence of policies operation. The policy hierarchy allows the concept of "Guardrails" to ensure that potentially dangerous policy actions may be controlled. For example, policies governing discounts in a grocery store need to be controlled for minimum profitability. Store managers (e.g. a business user) may have authority to develop new discount policies, but the new discount policies are in turn governed by policies created by the corporate office to ensure minimum profitability levels. Similarly, controlled access permits a department user in the store to only change the quantities a discount applies to without creating new rules allowing for ubiquitous deployment and customization of policies in conjunction with strong governance. Automatic enforcement of policies plays a strong role in establishing a strong governance model. In contrast, complex invocation and enforcement mechanics are barriers to establishing a strong governance model. In embodiments of the present technology invocation of policies at specified Policy Enforcement Points (PEPs) automatic and simple.

In some embodiments of the present technology, a user experience design (UX) for policy definition and customization is reusable in several contexts both within other applications as well as a standalone application. The reusability of the user experience design allows for holistic views of a policy allowing the policy to appear both in the relevant context that the policy is used as well as a collection of all policies including the policy hierarchy for cross cutting concerns. For example, a print policy may appear in the context of the print dialog of the applications that the print policy applies to as well as in a comprehensive list of policies as part of an administrative context. The policy hierarchy is especially important in the context of a single visual design environment allowing the design of applications, processes, and policies from a single visual canvas. For example, ASG Studio, and the like. This exemplary low code view of the application, the processes governed by the application, and the policies that apply to both, presents a single cohesive picture of the application and behavior of the application allowing a non-technical user (e.g., business user) to understand and rapidly adjust behaviors of the application without specialized technical knowledge.

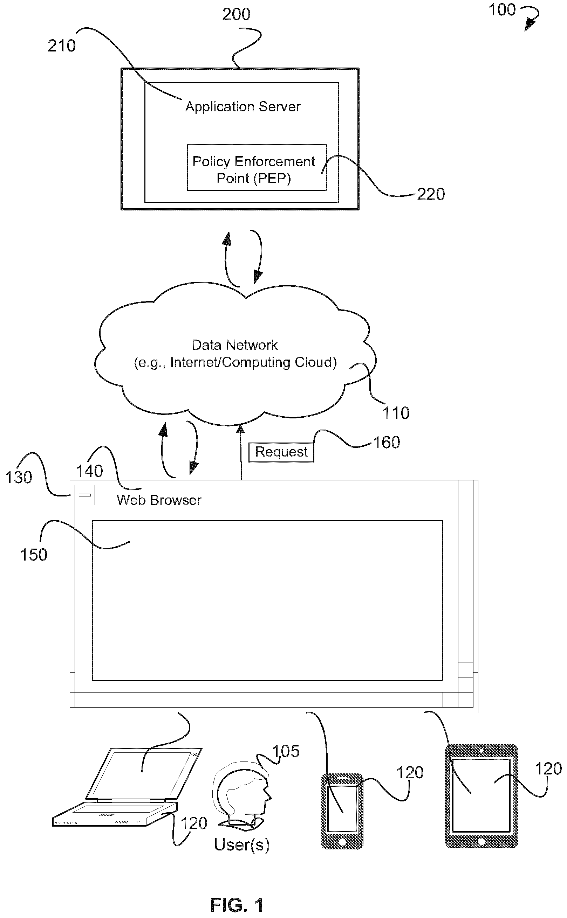

Referring now to the drawings, FIG. 1 illustrates an environment 100 within which methods and systems for secure policies-based information governance may be practiced, according to exemplary embodiments of the present technology. FIG. 1 illustrates the environment 100 within which systems and methods for methods for the secure policies-based information governance may be implemented. The environment 100 may include a data network 110 (e.g., an Internet or a computing cloud), user(s) 105, client device(s) 120 associated with the user(s) 105, and a system 200 for secure policies-based information governance using a Policy Enforcement Point (PEP) 220. The Policy Enforcement Point (PEP) 220 is a logical place in an application where a decision model will be executed and an action to be taken. A Policy Enforcement Point (PEP) (e.g., Policy Enforcement Point (PEP) 220) can be anywhere within an application. In some instances, a Policy Enforcement Point (PEP) is applicable to more than one place in an application. In some embodiments, a single Policy Enforcement Point (PEP) is adhered to by more than one application.

In some embodiments user(s) 105 may comprise business users who typically are not technical people (e.g., a business user, and the like). The user(s) 105 may comprise a policy designer user (e.g., a policy designer) may design policies and enable or disable all rules on a particular Policy Enforcement Point (PEP). The user(s) 105 may comprise IT developers (e.g., a developer) to define Policy Enforcement Points (PEP) and Policy Information Points (PIP). For example, a developer may define Policy Enforcement Points (PEPs) (e.g., Policy Enforcement Point (PEP) 220) and make a policy service aware of the Policy Enforcement Points (PEPs). The IT developers(e.g., a developer) are individuals that build and create software applications, and are proficient in one or more coding languages e.g., a developer). Client device(s) 120 may comprise a personal computer (PC), a desktop computer, a laptop, a smartphone, a tablet, or so forth.

In various embodiments the system 200 may include an application server 210 and a Policy Enforcement Point (PEP) 220. The client device(s) 120 may have a Graphical User Interface (GUI) 150. Furthermore, a web browser 140 may be running on the client device(s) 120 and may be displaying a user interface 130 including the Graphical User Interface (GUI) 150. For example, Graphical User Interface (GUI) 150 may a GUI receiving a business rule input or a policy designer interface. The web browser 140 may communicate with the application server 210 via the data network 110.

The data network 110 may include the Internet or any other network capable of communicating data between devices. Suitable networks may include or interface with any one or more of, for instance, a local intranet, a corporate data network, a data center network, a home data network, a Personal Area Network, a Local Area Network (LAN), a Wide Area Network (WAN), a Metropolitan Area Network, a virtual private network, a storage area network, a frame relay connection, an Advanced Intelligent Network connection, a synchronous optical network connection, a digital T1, T3, E1 or E3 line, Digital Data Service connection, Digital Subscriber Line connection, an Ethernet connection, an Integrated Services Digital Network line, a dial-up port such as a V.90, V.34 or V.34bis analog modem connection, a cable modem, an Asynchronous Transfer Mode connection, or a Fiber Distributed Data Interface or Copper Distributed Data Interface connection. Furthermore, communications may also include links to any of a variety of wireless networks, including Wireless Application Protocol, General Packet Radio Service, Global System for Mobile Communication, Code Division Multiple Access or Time Division Multiple Access, cellular phone networks, Global Positioning System, cellular digital packet data, Research in Motion, Limited duplex paging network, Bluetooth radio, or an IEEE 802.11-based radio frequency network. The data network can further include or interface with any one or more of a Recommended Standard 232 (RS-232) serial connection, an IEEE-1394 (FireWire) connection, a Fiber Channel connection, an IrDA (infrared) port, a Small Computer Systems Interface connection, a Universal Serial Bus (USB) connection or other wired or wireless, digital or analog interface or connection, mesh or Digi^{®} networking.

The web browser 140 may display a web page associated with the Graphical user Interface (GUI) 150 where user(s) 105 including a business user may define one or more policies and have the one or more policies adhered to by applications using one or more Policy Enforcement Points (PEPs) (Policy Enforcement Point 220). The web browser 140 may establish a communication channel with the application server 210 and may generate and render virtual screens based on data received from the application server 210.

The user(s) 105 may send a request 160 to the system 200 using the client device(s) 120. The request 160 may include a request to deploy a component to an application. In response to the request 160, the application server 210 may load the component to the application. The application and the component may be rendered by the web browser 140.

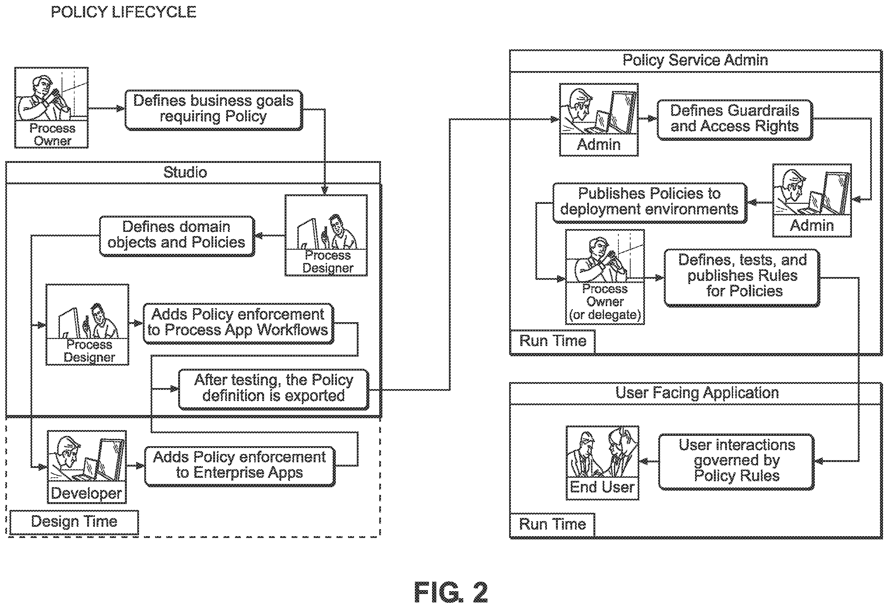

FIG. 2 illustrates a pictorial diagram of a policy lifecycle for secure policies-based information governance, according to exemplary embodiments of the present technology. The diagram of a policy lifecycle includes a studio, policy service administration, and user facing application.

The present technology enables a user (e.g., a business user) to define one or more policies and have the one or more policies adhered to by applications using one or more Policy Enforcement Points (PEPs). An application may be any program or group of programs designed for end users. The present technology includes a Graphical User Interface (GUI) (e.g., Graphical User Interface (GUI) 150) for a user (e.g., business user) to define one or more policies. For instance, a user (e.g., a business user) may enable or disable a policy using the Graphical User Interface (GUI) (e.g., Graphical User Interface (GUI) 150). In some instances, a user may enter examples to test the system to determine if expected results happen. Furthermore, the user (e.g., business user) may make the policy active or inactive for a defined period of time, make the policy take effect on a particular date using the Graphical User Interface (GUI) (e.g., Graphical User Interface (GUI) 150). Moreover, the user (e.g., business user) can view the audit trail of changes to the one or more policies.

The present technology enables a user (e.g., a policy designer) to enable or disable all rules on a particular Policy Enforcement Point (PEP). In contrast, a business user may only define rules on enabled Policy Enforcement Points (PEPs). A user (e.g., a policy designer) may hide or show some parts of the domain model from another user (e.g. the business user), so their rules are not cumbersome. In some instances, the user (e.g., a policy designer) may move column ordering. In some embodiments a user (e.g., a policy designer) may define "guard-rails" on returned data to ensure that the returned data makes logical sense. Furthermore, defining "guard-rails" by the user (e.g., a policy designer) may prevent a user (e.g., the business user) from entering erroneous data.

The present technology enables a user (e.g., a developer) to define Policy Enforcement Points (PEP) and Policy Information Points (PIP). An exemplary, Policy Information Point (PIP) is a decision table template and a domain model. In some instances, a user (e.g., a developer) may rely on common domain models for a decision table template. In other instances, a user (e.g., a developer) may create one or more custom domain models. Furthermore, a user (e.g., a developer) may call the Policy Enforcement Point (PEP) from a developer application resulting in the call of the Policy Enforcement Point (PEP) informing the developer application of the appropriate action based on the policy.

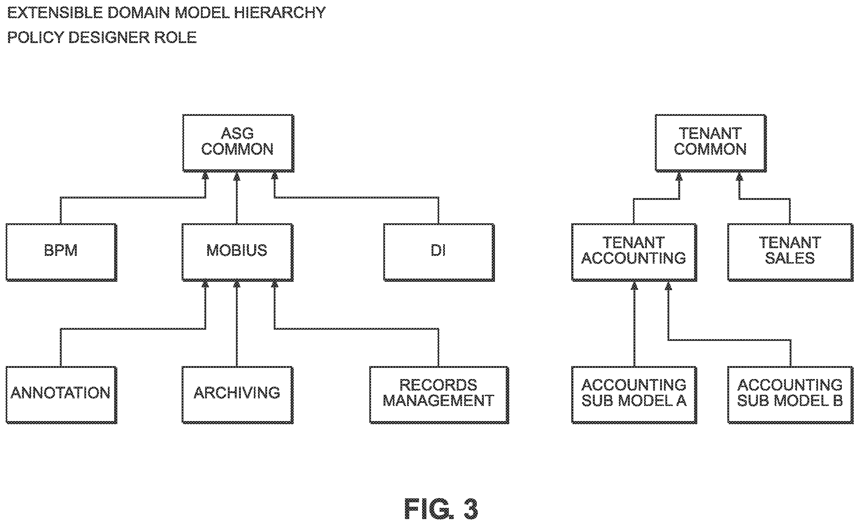

FIG. 3 illustrates another pictorial diagram of an extensible hierarchical domain model for secure policies-based information governance, according to exemplary embodiments of the present technology. The present technology enables a user (e.g., a policy designer) to enable or disable all rules on a particular Policy Enforcement Point (PEP). FIG. 3 shows the role of a user (e.g., a policy designer). For example, a policy designer may define a plurality of domain objects and a plurality of domain object representations in the Graphical User Interface (GUI) (e.g., Graphical User Interface (GUI) 150) based on the policy and the policy hierarchy. Furthermore, a policy designer may define an extensible hierarchical domain model definition using the policy hierarchy, the extensible hierarchical domain model definition being modified using the plurality of domain object representations in the Graphical User Interface (GUI) (e.g., Graphical User Interface (GUI) 150). In some instances, a user (e.g., a policy designer) may generate a custom domain model and the evaluating, using the Policy Information Point (PIP), the attributes of the user comprises using the custom domain model. In various instances, the evaluating, by the Policy Decision Point (PDP), the user request to access the resource further comprises: sending, by the Policy Decision Point (PDP), an attribute evaluation request regarding the attributes of the user to a Policy Information Point (PIP); evaluating, using the Policy Information Point (PIP), the attributes of the user, the evaluating using the extensible hierarchical domain model definition; and replying, by the Policy Information Point (PIP), to the attribute evaluation request based on the evaluating, using the Policy Information Point (PIP), of the attributes of the user. For example, the evaluating, using the Policy Information Point (PIP), the attributes of the user may comprise using at least one of a decision model template, a decision table template, and a domain. In various instances, the evaluating, using the Policy Information Point (PIP), the attributes of the user comprises using the decision table template, the decision table template comprising: information for presenting the decision table template to the business user using the Graphical User Interface (GUI); attributes of the plurality of domain objects; and formatting of the attributes of the plurality of domain objects for displaying on the Graphical User Interface (GUI).

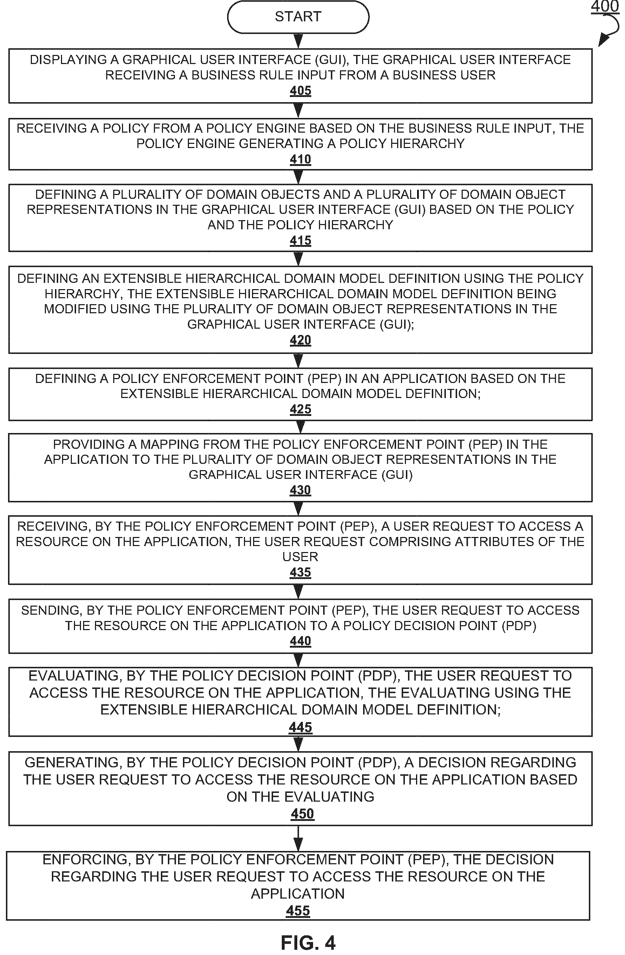

FIG. 4 illustrates process flow diagram showing a method for secure policies-based information governance, in accordance with various embodiments of the present technology. FIG. 4 is a process flow diagram showing a method 400 for secure policies-based information governance according to one or more example embodiments. The method 400 may be performed by processing logic that may comprise hardware (e.g., dedicated logic, programmable logic, and microcode), software (such as software run on a general-purpose computer system or a dedicated machine), or a combination thereof.

As shown in FIG. 4, the method 400 may commence at operation 405, displaying a Graphical User Interface (GUI) (e.g., Graphical User Interface (GUI) 150), the graphical user interface receiving a business rule input from a business user.

At operation 410, the method 400 may proceed with receiving a policy from a policy engine based on the business rule input, the policy engine generating a policy hierarchy. For example, a user (e.g., a policy designer) may design the policy.

At operation 415, the method 400 may include defining a plurality of domain objects and a plurality of domain object representations in the Graphical User Interface (GUI) (e.g., Graphical User Interface (GUI) 150) based on the policy and the policy hierarchy.

At operation 420, the method 400 may proceed with defining an extensible hierarchical domain model definition using the policy hierarchy, the extensible hierarchical domain model definition being modified using the plurality of domain object representations in the Graphical User Interface (GUI) (e.g., Graphical User Interface (GUI) 150).

At operation 425, the method 400 may include defining a Policy Enforcement Point (PEP) in an application based on the extensible hierarchical domain model definition. For example, IT developers (e.g., a developer) may define Policy Enforcement Points (PEP) (e.g., Policy Enforcement Point (PEP) 220) and Policy Information Points (PIP). For instance, a developer may define Policy Enforcement Points (PEPs) (e.g., Policy Enforcement Point (PEP) 220) and make a policy service aware of the Policy Enforcement Points (PEPs).

At operation 430, the method 400 may proceed providing a mapping from the Policy Enforcement Point (PEP) (e.g., Policy Enforcement Point (PEP) 220) in the application to the plurality of domain object representations in the Graphical User Interface (GUI) (e.g., Graphical User Interface (GUI) 150).

At operation 435, the method 400 may include receiving, by the Policy Enforcement Point (PEP) (e.g., Policy Enforcement Point (PEP) 220), a user request to access a resource on the application, the user request comprising attributes of the user.

At operation 440, the method 400 may include sending, by the Policy Enforcement Point (PEP) (e.g., Policy Enforcement Point (PEP) 220), the user request to access the resource on the application to a Policy Decision Point (PDP).

At operation 445, the method 400 may include evaluating, by the Policy Decision Point (PDP), the user request to access the resource on the application, the evaluating using the extensible hierarchical domain model definition.

At operation 450, the method 400 may include generating, by the Policy Decision Point (PDP), a decision regarding the user request to access the resource on the application.

At operation 455, the method 400 may include enforcing, by the Policy Enforcement Point (PEP) (e.g., Policy Enforcement Point (PEP) 220), the decision regarding the user request to access the resource on the application.

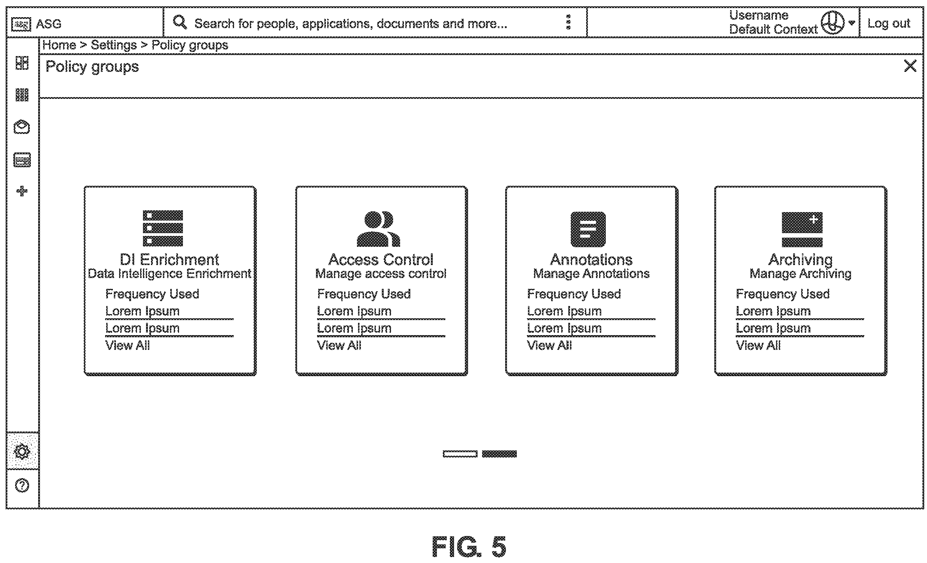

FIG. 5 illustrates a Graphical User Interface (GUI) (e.g., Graphical User Interface (GUI) 150) showing a dashboard including policy groups for secure policies-based information governance, in accordance with various embodiments of the present technology. For example, the Graphical User Interface (GUI) of FIG. 5 shows the initial dashboard a user (e.g., a business user) may use to define one or more policies and have the one or more policies adhered to by applications. For example, the Graphical User Interface (GUI) of FIG. 5 shows policy groups.

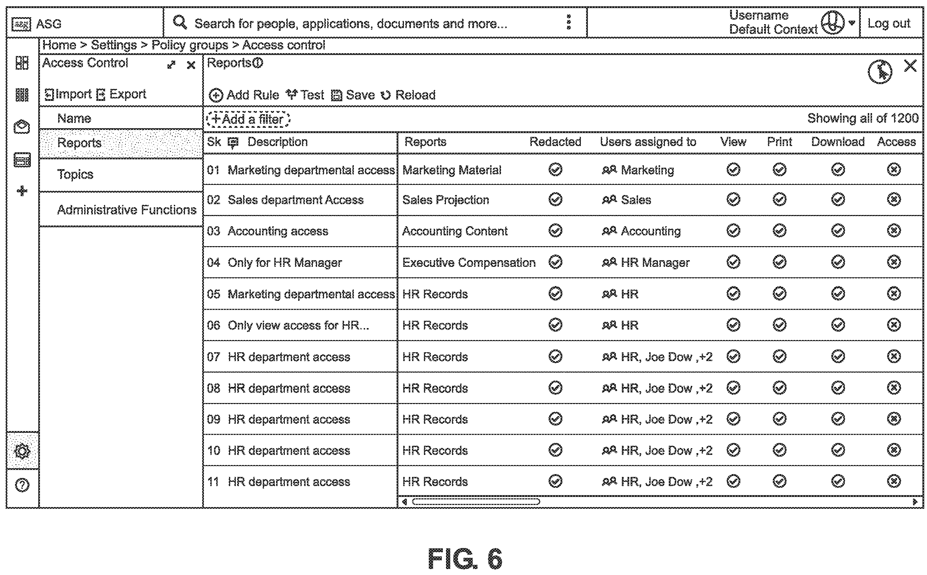

FIG. 6 illustrates a Graphical User Interface (GUI) (e.g., Graphical User Interface (GUI) 150) showing a subject heading of policy groups, sub-heading access control of reports including a table of policies comprising a policy hierarchy for secure policies-based information governance, in accordance with various embodiments of the present technology. For example, the Graphical User Interface (GUI) of FIG. 6 shows a description of business rules including marketing departmental access, sales department access, accounting access, and so forth, that correspond to policies. Furthermore, the Graphical User Interface (GUI) of FIG. 6 shows the access controls for the business rules including view, print, download, access, and so forth.

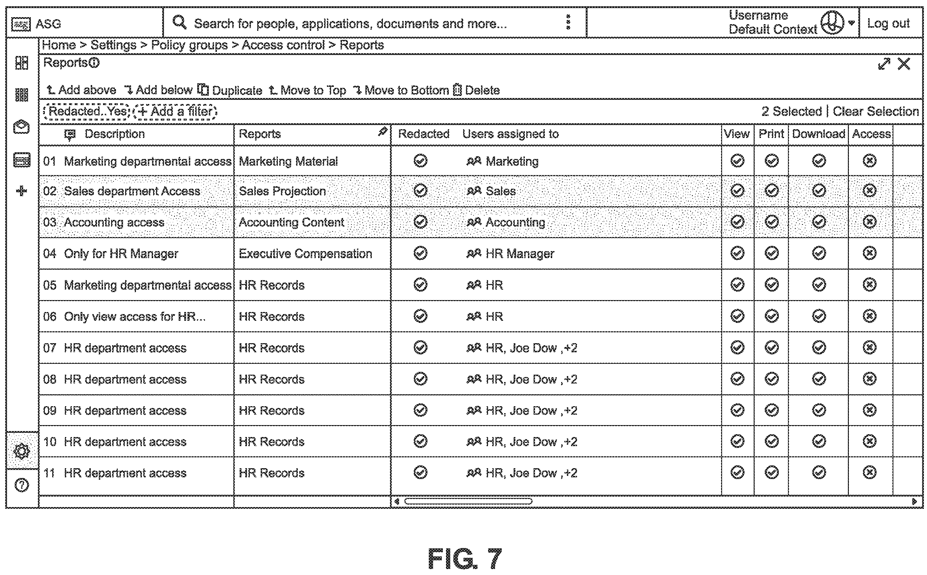

FIG. 7 illustrates a Graphical User Interface (GUI) (e.g., Graphical User Interface (GUI) 150) showing two selected business rules of a table of business rules comprising a policy hierarchy for secure policies-based information governance, after a user selects the subject heading of policy groups, sub-heading access control of reports of FIG. 6, in accordance with various embodiments of the present technology. For example, the Graphical User Interface (GUI) of FIG. 7 shows a user (e.g., a business user) selecting two business rules, sales departmental access and accounting access, for secure policies-based information governance enabled by the present technology.

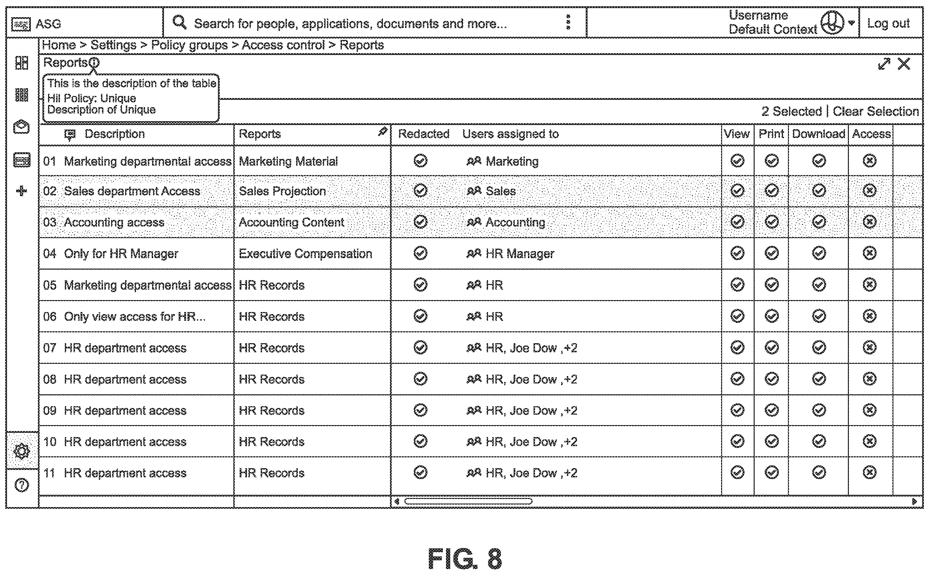

FIG. 8 illustrates a Graphical User Interface (GUI) (e.g., Graphical User Interface (GUI) 150) showing two selected policies including a description of a table of policies comprising a policy hierarchy and a policy description for secure policies-based information governance, in accordance with various embodiments of the present technology. For example, the Graphical User Interface (GUI) of FIG. 8 shows a user (e.g., a business user) selecting the two business rules and also shows a description of the table and the policies for secure policies-based information governance enabled by the present technology.

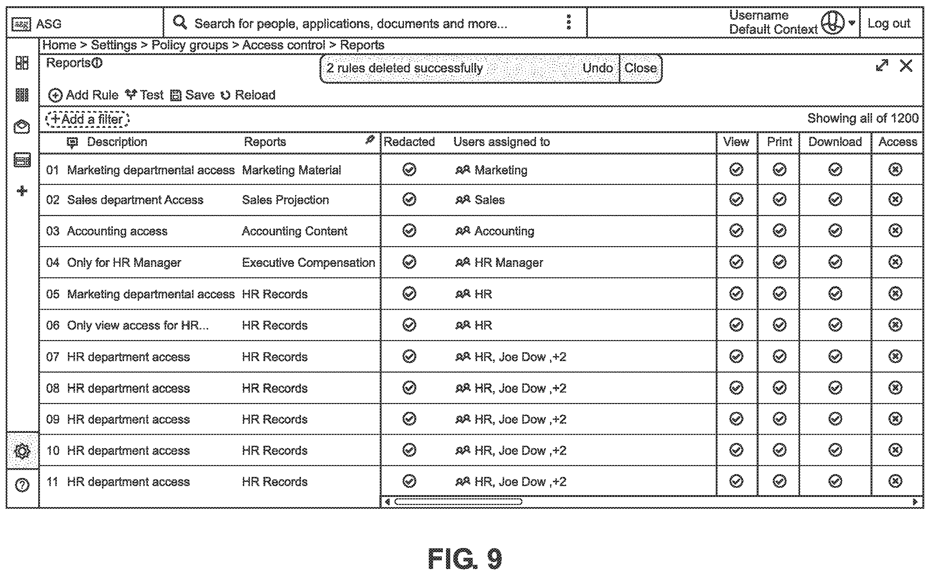

FIG. 9 illustrates a Graphical User Interface (GUI) (e.g., Graphical User Interface (GUI) 150) showing two business rules of a table of policies comprising a policy hierarchy have been deleted successfully for secure policies-based information governance in accordance with various embodiments of the present technology. For example, the Graphical User Interface (GUI) of FIG. 9 shows a user (e.g., a business user) having successfully deleted two business rules, for secure policies-based information governance enabled by the present technology.

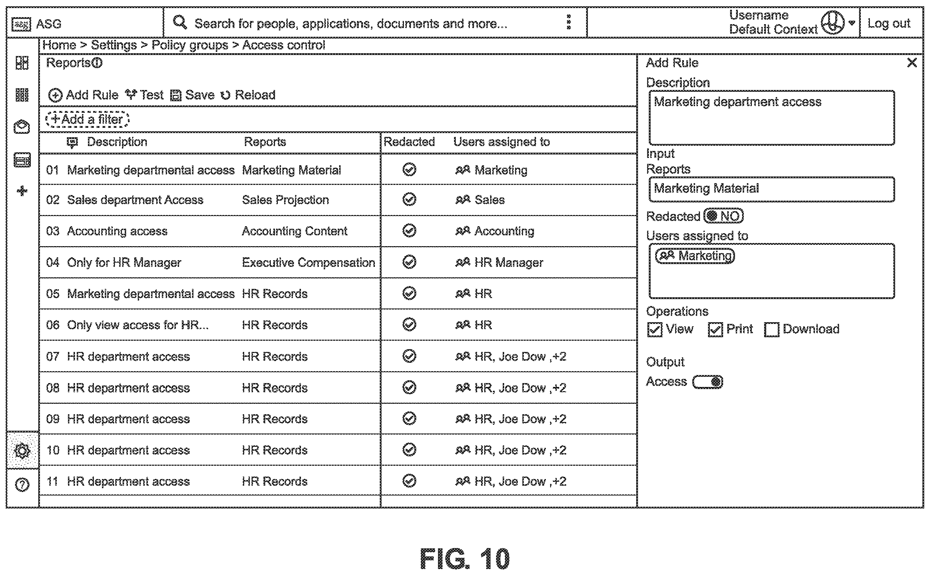

FIG. 10 illustrates a Graphical User Interface (GUI) (e.g., Graphical User Interface (GUI) 150) showing adding a business rule to a table of policies comprising a policy hierarchy for secure policies-based information governance in accordance with various embodiments of the present technology. For example, the Graphical User Interface (GUI) of FIG. 10 shows a user (e.g., a business user) providing a business rule input for secure policies-based information governance enabled by the present technology. For instance, FIG. 10 shows displaying of a Graphical User Interface (GUI), the graphical user interface receiving the business rule input from a business user.

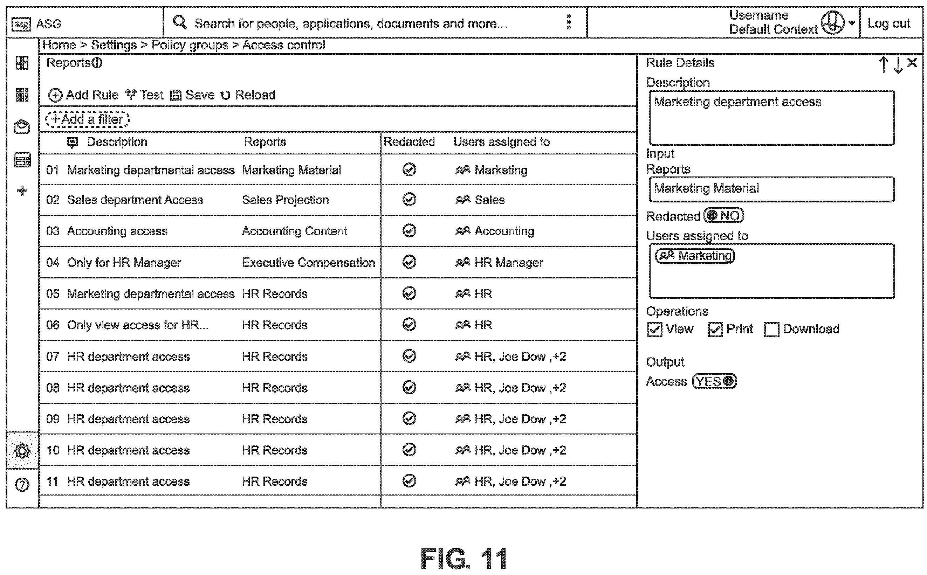

FIG. 11 illustrates a Graphical User Interface (GUI) (e.g., Graphical User Interface (GUI) 150) showing adding access controls to the business rule for secure policies-based information governance in accordance with various embodiments of the present technology. For example, the Graphical User Interface (GUI) of FIG. 11 shows a user (e.g., a business user) allowing access control to the business rule input. For instance, a business user may allow access to marketing material by marketing users for secure policies-based information governance enabled by the present technology. In some instances, allowing access results in the decision regarding the user request to access the resource on the application is to grant access to the resource based on the policy; and the enforcing, by the Policy Enforcement Point (PEP), the decision regarding the user request to access the resource on the application is granting access to the resource on the application. In other instances, not allowing access (i.e., disabling access) results in the decision regarding the user request to access the resource on the application is to deny access to the resource based on the policy; and the enforcing, by the Policy Enforcement Point (PEP), the decision regarding the user request to access the resource is denying access to the resource on the application.

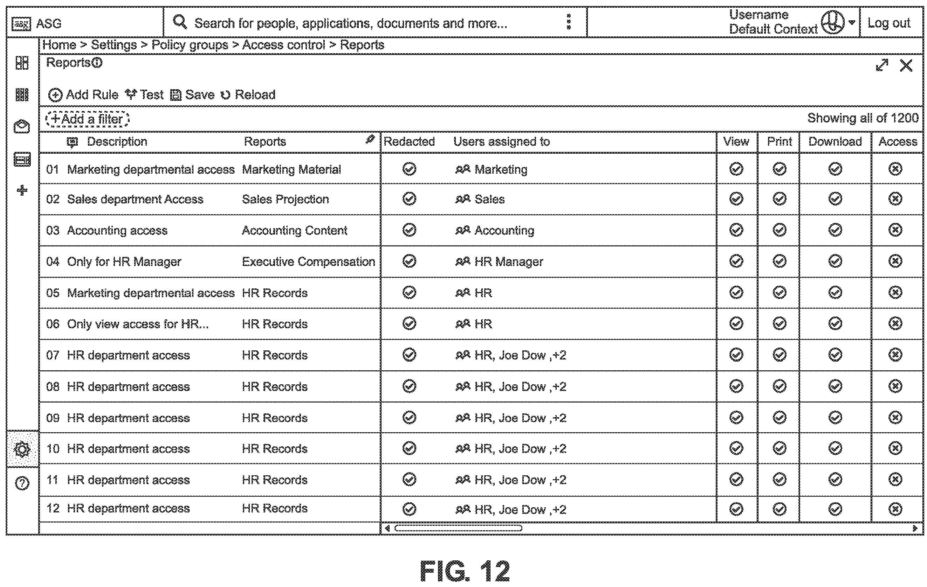

FIG. 12 illustrates a Graphical User Interface (GUI) (e.g., Graphical User Interface (GUI) 150) showing adding policy hierarchy data to a policy of a table of policies comprising a policy hierarchy for secure policies-based information governance in accordance with various embodiments of the present technology. For example, the Graphical User Interface (GUI) of FIG. 12 shows the result of a business user input of FIG. 11 displayed of Graphical User Interface (GUI) for secure policies-based information governance enabled by the present technology.

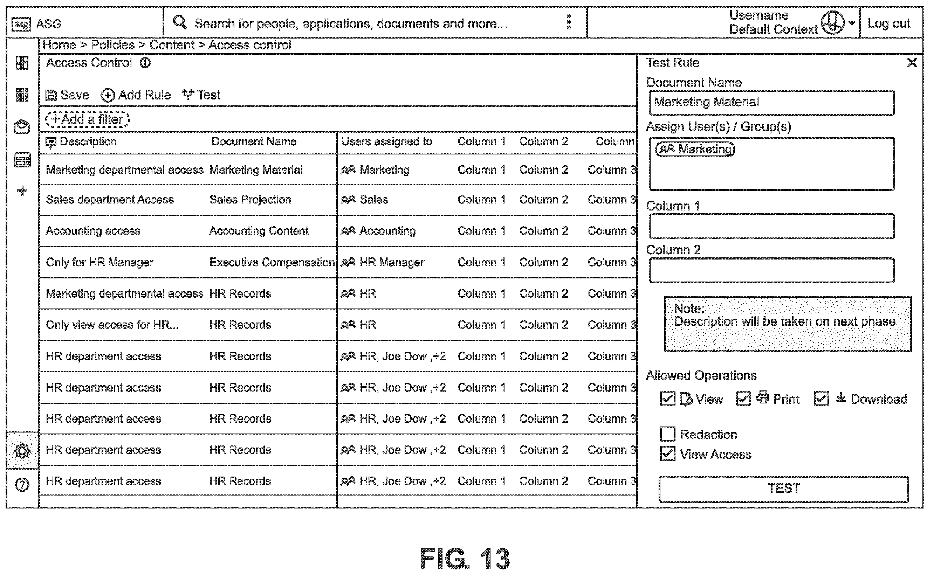

FIG. 13 illustrates a Graphical User Interface (GUI) (e.g., Graphical User Interface (GUI) 150) showing the enabling of a user to test a business rule input for secure policies-based information governance in accordance with various embodiments of the present technology. For example, the Graphical User Interface (GUI) of FIG. 13 shows a business user testing the business rule input of FIG. 11.

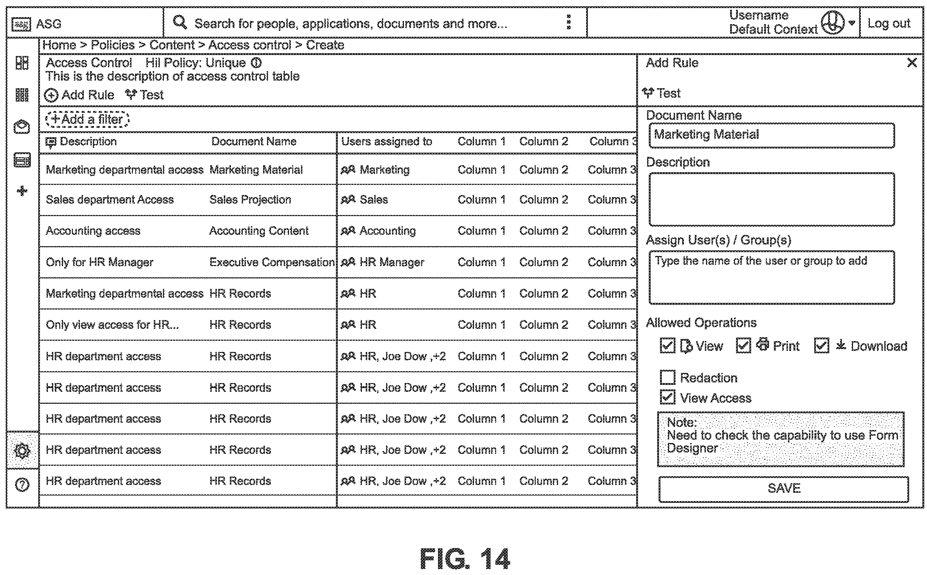

FIG. 14 illustrates a Graphical User Interface (GUI) (e.g., Graphical User Interface (GUI) 150) showing the enabling of a user to save a business rule after testing for secure policies-based information governance in accordance with various embodiments of the present technology. For example, the Graphical User Interface (GUI) of FIG. 14 shows a business user saving the business rule input after testing as shown in FIG. 13.

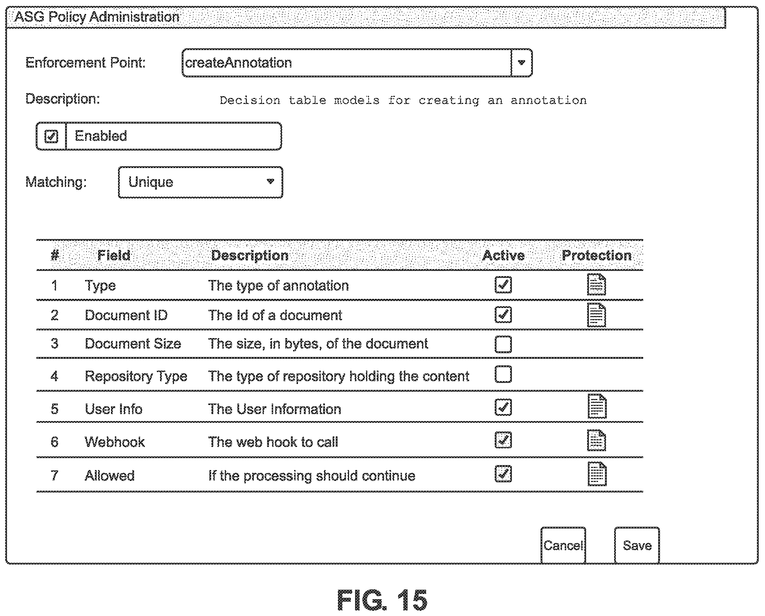

FIG. 15 illustrates a Graphical User Interface (GUI) showing a policy designer screen including hierarchy data to a policy for secure policies-based information governance in accordance with various embodiments of the present technology. For example, a user (e.g., a policy designer) may enable or disable all rules on a particular Policy Enforcement Point (PEP). For instance, policy designer may disable a Policy Enforcement Point (PEP) so no rules may be created for the Policy Enforcement Point (PEP) using the policy designer screen. In some instances, by default a Policy Enforcement Point (PEPs) are enabled. In some instances, the policy designer screen for the business user may receive a disable policy enforcement point input, the disable policy enforcement point input disabling the Policy Enforcement Point (PEP) preventing the Policy Enforcement Point (PEP) from enforcing the policy. In other instances, the policy designer screen for the business user may receive an enable policy enforcement point input, the enable policy enforcement point input enabling the Policy Enforcement Point (PEP) allowing the Policy Enforcement Point (PEP) to enforce the policy.

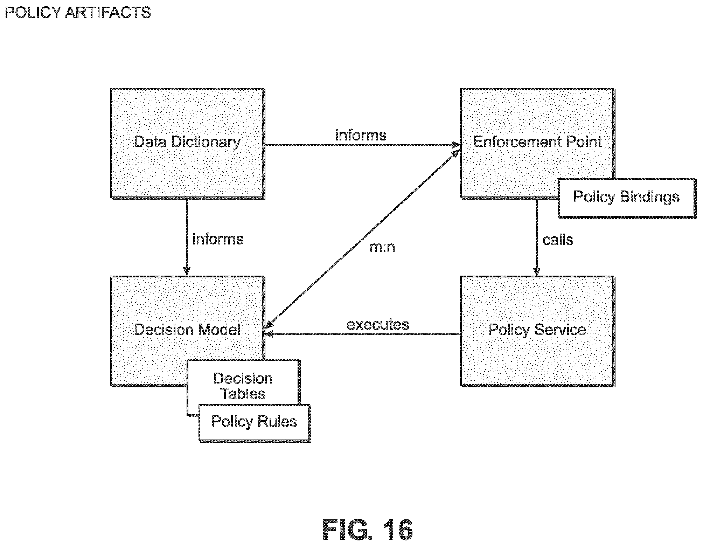

FIG. 16 illustrates a pictorial diagram of policy artifacts for secure policies-based information governance, according to exemplary embodiments of the present technology. For example, the diagram of policy artifacts for secure policies-based information governance of FIG. 16 show a domain model (also referenced as a data dictionary), an enforcement point (e.g., Policy Enforcement Point (PEP) 220), decision model, and policy service. The domain model (e.g., data dictionary) may comprise type definitions used by IT developers (e.g., a developer). The enforcement point (e.g., Policy Enforcement Point (PEP) 220) enables policy binding and may include Java annotations used by IT developers (e.g., a developer). The policy service comprises a client Application Programming Interface (API) (e.g., Java Aspects, Java API, REST) and the policy service may be standalone or embedded. The decision model comprises a decision table including input data (e.g., columns), output decision (e.g., columns), policy rules (rows), and match criteria.

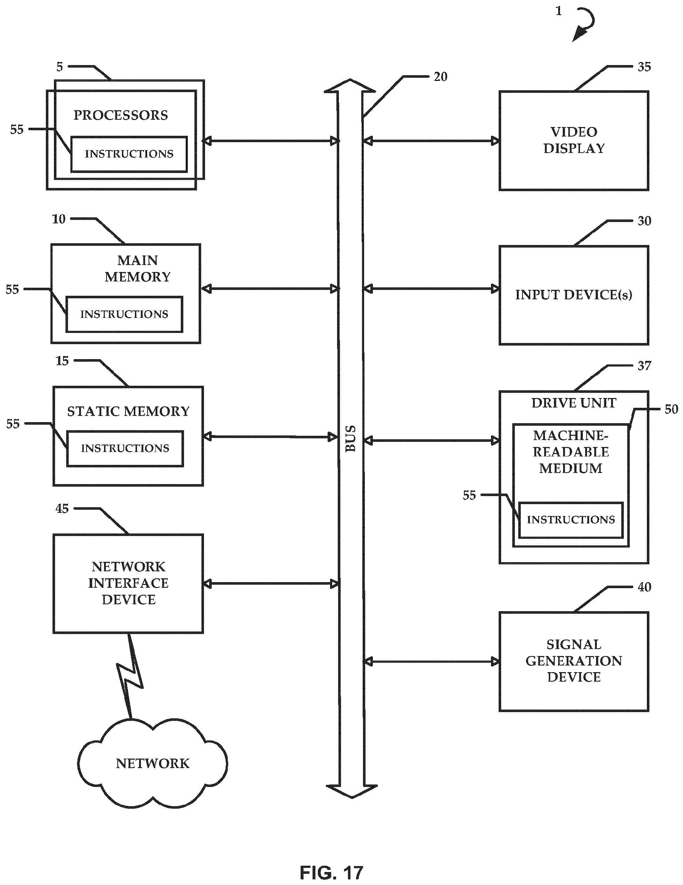

FIG. 17 illustrates an exemplary computer system that may be used to implement embodiments of the present technology according to various embodiments. FIG. 17 illustrates a computer system for implementing embodiments according to exemplary embodiments of the present technology. FIG. 17 is a diagrammatic representation of an example machine in the form of a computer system 1, within which a set of instructions for causing the machine to perform any one or more of the methodologies discussed herein may be executed. In various example embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a personal digital assistant (PDA), a cellular telephone, a portable music player (e.g., a portable hard drive audio device such as an Moving Picture Experts Group Audio Layer 3 (MP3) player), a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1 includes a processor or multiple processor(s) 5 (e.g., a central processing unit (CPU), a graphics processing unit (GPU), or both), and a main memory 10 and static memory 15, which communicate with each other via a bus 20. The computer system 1 may further include a video display 35 (e.g., a liquid crystal display (LCD)). The computer system 1 may also include an alpha-numeric input device(s) 30 (e.g., a keyboard), a cursor control device (e.g., a mouse), a voice recognition or biometric verification unit (not shown), a drive unit 37 (also referred to as disk drive unit), a signal generation device 40 (e.g., a speaker), and a network interface device 45. The computer system 1 may further include a data encryption module (not shown) to encrypt data.

The disk drive unit 37 includes a computer or machine-readable medium 50 on which is stored one or more sets of instructions and data structures (e.g., instructions 55) embodying or utilizing any one or more of the methodologies or functions described herein. The instructions 55 may also reside, completely or at least partially, within the main memory 10 and/or within the processor(s) 5 during execution thereof by the computer system 1. The main memory 10 and the processor(s) 5 may also constitute machine-readable media.

The instructions 55 may further be transmitted or received over a network via the network interface device 45 utilizing any one of a number of well-known transfer protocols (e.g., Hyper Text Transfer Protocol (HTTP)). While the machine-readable medium 50 is shown in an example embodiment to be a single medium, the term "computer-readable medium" should be taken to include a single medium or multiple media (e.g., a centralized or distributed database and/or associated caches and servers) that store the one or more sets of instructions. The term "computer-readable medium" shall also be taken to include any medium that is capable of storing, encoding, or carrying a set of instructions for execution by the machine and that causes the machine to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media, and carrier wave signals. Such media may also include, without limitation, hard disks, floppy disks, flash memory cards, digital video disks, random access memory (RAM), read only memory (ROM), and the like. The example embodiments described herein may be implemented in an operating environment comprising software installed on a computer, in hardware, or in a combination of software and hardware.

One skilled in the art will recognize that the Internet service may be configured to provide Internet access to one or more computing devices that are coupled to the Internet service, and that the computing devices may include one or more processors, buses, memory devices, display devices, input/output devices, and the like. Furthermore, those skilled in the art may appreciate that the Internet service may be coupled to one or more databases, repositories, servers, and the like, which may be utilized in order to implement any of the embodiments of the disclosure as described herein.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

In the description, for purposes of explanation and not limitation, specific details are set forth, such as particular embodiments, procedures, techniques, and so forth, in order to provide a thorough understanding of the present technology. However, it will be apparent to one skilled in the art that the present technology may be practiced in other embodiments that depart from these specific details.

While specific embodiments of, and examples for, the system are described above for illustrative purposes, various equivalent modifications are possible within the scope of the system, as those skilled in the relevant art will recognize. For example, while processes or steps are presented in a given order, alternative embodiments may perform routines having steps in a different order, and some processes or steps may be deleted, moved, added, subdivided, combined, and/or modified to provide alternative or sub-combinations. Each of these processes or steps may be implemented in a variety of different ways. Also, while processes or steps are at times shown as being performed in series, these processes or steps may instead be performed in parallel or may be performed at different times.

While various embodiments have been described above, it should be understood that they have been presented by way of example only, and not limitation. The descriptions are not intended to limit the scope of the present technology to the particular forms set forth herein. To the contrary, the present descriptions are intended to cover such alternatives, modifications, and equivalents as may be included within the scope of the present technology as appreciated by one of ordinary skill in the art. Thus, the breadth and scope of a preferred embodiment should not be limited by any of the above-described exemplary embodiments.

## Claims

1. A method for secure policies-based information governance, the method comprising:
displaying (405) a Graphical User Interface, GUI (150), the GUI (150) receiving a business rule input from a business user (105);
receiving (410) a policy from a policy engine based on the business rule input, the policy engine generating a policy hierarchy that allows precedence of policies operation, the policy hierarchy allowing the concept of guardrails to ensure that potentially dangerous policy actions may be controlled;
defining (415) a plurality of domain objects and a plurality of domain object representations in the GUI (150) based on the policy and the policy hierarchy;
defining (420) an extensible hierarchical domain model definition using the policy hierarchy, the extensible hierarchical domain model definition being modified using the plurality of domain object representations in the GUI (150);
defining (425) a Policy Enforcement Point, PEP (220) in an application based on the extensible hierarchical domain model definition;
providing (430) a mapping from the PEP (220) in the application to the plurality of domain object representations in the GUI (150);
receiving (435), by the PEP (220), a user request to access a resource on the application, the user request comprising attributes of a user (105); and
enforcing (455), by the PEP (220), a decision regarding the user request to access the resource on the application.

2. The method as recited in claim 1, further comprising:
sending (440), by the PEP (220), the user request to access the resource on the application to a Policy Decision Point, PDP;
evaluating (445), by the PDP, the user request to access the resource on the application, the evaluating (445) using the extensible hierarchical domain model definition; and
generating (450), by the PDP, the decision regarding the user request to access the resource on the application based on the evaluating (445).

3. The method as recited in claim 2, wherein the evaluating (445), by the PDP, the user request to access the resource further comprises:
sending, by the PDP, an attribute evaluation request regarding the attributes of the user (105) to a Policy Information Point, PIP;
evaluating, using the PIP, the attributes of the user (105), the evaluating using the extensible hierarchical domain model definition; and
replying, by the PIP, to the attribute evaluation request based on the evaluating, using the PIP, of the attributes of the user.

4. The method as recited in claim 3, wherein the evaluating, using the PIP, the attributes of the user (105) comprises using at least one of a decision model template, a decision table template, and a domain.

5. The method as recited in claim 4, wherein the evaluating, using the PIP, the attributes of the user (105) comprises using the decision table template, the decision table template comprising:
information for presenting the decision table template to the business user (105) using the GUI (150);
attributes of the plurality of domain objects; and
formatting of the attributes of the plurality of domain objects for displaying on the GUI (150).

6. The method as recited in any of claims 3-5, further comprising generating a custom domain model;
wherein the evaluating, using the PIP, the attributes of the user (105) comprises using the custom domain model.

7. The method as recited in any of the preceding claims, wherein the GUI (150) further comprises a policy designer screen for the business user (105).

8. The method as recited in claim 7, wherein the policy designer screen is configured to receive a disable policy enforcement point input, the disable policy enforcement point input disabling the PEP (220) preventing the PEP (220) from enforcing the policy.

9. The method as recited in claim 7 or 8, wherein the policy designer screen is configured to receive an enable policy enforcement point input, the enable policy enforcement point input enabling the PEP (220) allowing the PEP (220) to enforce the policy.

10. The method as recited in any of the preceding claims,
wherein the decision regarding the user request to access the resource on the application is to deny access to the resource based on the policy; and
wherein the enforcing (455), by the PEP (220), the decision regarding the user request to access the resource is denying access to the resource on the application.

11. The method as recited in any of the preceding claims,
wherein the decision regarding the user request to access the resource on the application is to grant access to the resource based on the policy; and
wherein the enforcing (455), by the PEP (220), the decision regarding the user request to access the resource on the application is granting access to the resource on the application.

12. A computer system comprising one or more processors (5) configured to perform the method of any of claims 1-11.

13. The computer system of claim 12, the system (1) further comprising the GUI (150), and the policy engine.

14. A computer program comprising instructions (55) which, when the program is executed by a computer system (1), cause the computer system (1) to carry out the method of any of claims 1-11.

15. A computer-readable medium comprising instructions (55) which, when executed by a computer system (1), cause the computer system (1) to perform the method of any of claims 1-11.

## Patentansprüche

1. Verfahren zur sicheren, richtlinienbasierten Informationsverwaltung, wobei das Verfahren aufweist:
Anzeigen (405) einer grafischen Benutzeroberfläche, GUI, (150), wobei die GUI (150) eine Eingabe einer Geschäftsregel von einem Geschäftsnutzer (105) empfängt;
Empfangen (410) einer Richtlinie von einer Richtlinien-Engine auf Grundlage der Eingabe der Geschäftsregel, wobei die Richtlinien-Engine eine Richtlinienhierarchie generiert, die eine Rangordnung von Richtlinienoperationen ermöglicht, wobei die Richtlinienhierarchie das Konzept von Schutzbedingungen ermöglicht, um sicherzustellen, dass potenziell gefährliche Richtlinienaktionen kontrolliert werden können;
Definieren (415) einer Vielzahl von Domänenobjekten und einer Vielzahl von Domänenobjektdarstellungen in der GUI (150) auf Grundlage der Richtlinie und der Richtlinienhierarchie;
Definieren (420) einer erweiterbaren hierarchischen Domänenmodelldefinition unter Verwendung der Richtlinienhierarchie, wobei die erweiterbare hierarchische Domänenmodelldefinition unter Verwendung der Vielzahl von Domänenobjektdarstellungen in der GUI (150) modifiziert wird;
Definieren (425) eines Richtlinien-Durchsetzungspunkts, PEP, (220) in einer Anwendung auf Grundlage der erweiterbaren hierarchischen Domänenmodelldefinition;
Bereitstellen (430) einer Zuordnung von dem PEP (220) in der Anwendung zu der Vielzahl von Domänenobjektdarstellungen in der GUI (150);
Empfangen (435) durch den PEP (220) einer Benutzeranfrage für den Zugriff auf eine Ressource in der Anwendung, wobei die Benutzeranfrage Attribute eines Benutzers (105) aufweist; und
Durchsetzen (455) einer Entscheidung bezüglich der Benutzeranfrage für den Zugriff auf die Ressource in der Anwendung durch den PEP (220).

2. Verfahren nach Anspruch 1, das ferner aufweist:
Senden (440) der Benutzeranfrage für den Zugriff auf die Ressource in der Anwendung durch den PEP (220) an einen Richtlinien-Entscheidungspunkt, PDP;
Auswerten (445) der Benutzeranfrage für den Zugriff auf die Ressource in der Anwendung durch den PDP, wobei das Auswerten (445) die erweiterbare hierarchische Domänenmodelldefinition verwendet; und
Erzeugen (450) der Entscheidung bezüglich der Benutzeranfrage für den Zugriff auf die Ressource in der Anwendung durch den PDP auf Grundlage des Auswertens (445).

3. Verfahren nach Anspruch 2, wobei das Auswerten (445) der Benutzeranfrage für den Zugriff auf die Ressource durch den PDP ferner aufweist:
Senden einer Attributauswertungsanfrage bezüglich der Attribute des Benutzers (105) durch den PDP an einen Richtlinien-Informationspunkt, PIP;
Auswerten der Attribute des Benutzers (105) unter Verwendung des PIP, wobei das Auswerten unter Verwendung der erweiterbaren hierarchischen Domänenmodelldefinition erfolgt; und
Beantworten der Attributauswertungsanfrage durch den PIP auf Grundlage des Auswertens der Attribute des Benutzers unter Verwendung des PIP.

4. Verfahren nach Anspruch 3, wobei das Auswerten der Attribute des Benutzers (105) unter Verwendung des PIP Verwenden mindestens eines der folgenden Elemente aufweist: eine Entscheidungsmodellvorlage, eine Entscheidungstabellenvorlage und eine Domäne.

5. Verfahren nach Anspruch 4, wobei das Auswerten der Attribute des Benutzers (105) unter Verwendung des PIP Verwenden der Entscheidungstabellenvorlage aufweist, wobei die Entscheidungstabellenvorlage Folgendes aufweist:
Informationen zum Darstellen der Entscheidungstabellenvorlage für den Geschäftsnutzer (105) unter Verwendung der GUI (150);
Attribute der Vielzahl von Domänenobjekten; und
Formatierung der Attribute der Vielzahl von Domänenobjekten zum Anzeigen auf der GUI (150).

6. Verfahren nach einem der Ansprüche 3-5, das ferner Erzeugen eines benutzerdefinierten Domänenmodells aufweist;
wobei das Auswerten der Attribute des Benutzers (105) unter Verwendung des PIP Verwenden des benutzerdefinierten Domänenmodells aufweist.

7. Verfahren nach einem der vorangehenden Ansprüche, wobei die GUI (150) ferner einen Richtlinien-Designer-Bildschirm für den Geschäftsnutzer (105) aufweist.

8. Verfahren nach Anspruch 7, wobei der Richtlinien-Designer-Bildschirm so konfiguriert ist, dass er eine Eingabe zum Deaktivieren eines Richtlinien-Durchsetzungspunkts empfängt, wobei die Eingabe zum Deaktivieren eines Richtlinien-Durchsetzungspunkts den PEP (220) deaktiviert und verhindert, dass der PEP (220) die Richtlinie durchsetzt.

9. Verfahren nach Anspruch 7 oder 8, wobei der Richtlinien-Designer-Bildschirm so konfiguriert ist, dass er eine Eingabe zum Aktivieren eines Richtlinien-Durchsetzungspunkts empfängt, wobei die Eingabe zum Aktivieren eines Richtlinien-Durchsetzungspunkts den PEP (220) aktiviert, um dem PEP (220) zu ermöglichen, die Richtlinie durchzusetzen.

10. Verfahren nach einem der vorangehenden Ansprüche,
wobei die Entscheidung bezüglich der Benutzeranfrage für den Zugriff auf die Ressource in der Anwendung darin besteht, auf Grundlage der Richtlinie Zugriff auf die Ressource zu verweigern; und
wobei das Durchsetzen (455) der Entscheidung bezüglich der Benutzeranfrage für den Zugriff auf die Ressource durch den PEP (220) darin besteht, Zugriff auf die Ressource in der Anwendung zu verweigern.

11. Verfahren nach einem der vorangehenden Ansprüche,
wobei die Entscheidung bezüglich der Benutzeranfrage für den Zugriff auf die Ressource in der Anwendung darin besteht, auf Grundlage der Richtlinie Zugriff auf die Ressource zu gewähren; und
wobei das Durchsetzen (455) der Entscheidung bezüglich der Benutzeranforderung für den Zugriff auf die Ressource in der Anwendung durch den PEP (220) darin besteht, Zugriff auf die Ressource in der Anwendung zu gewähren.

12. Computersystem mit einem oder mehreren Prozessoren (5), die so konfiguriert sind, dass sie das Verfahren nach einem der Ansprüche 1-11 ausführen.

13. Computersystem nach Anspruch 12, wobei das System (1) ferner die GUI (150) und die Richtlinien-Engine aufweist.

14. Computerprogramm, das Anweisungen (55) aufweist, die, wenn das Programm von einem Computersystem (1) ausgeführt wird, das Computersystem (1) veranlassen, das Verfahren gemäß einem der Ansprüche 1-11 auszuführen.

15. Computerlesbares Medium, das Anweisungen (55) aufweist, die, wenn sie von einem Computersystem (1) ausgeführt werden, das Computersystem (1) veranlassen, das Verfahren gemäß einem der Ansprüche 1-11 auszuführen.

## Revendications

1. Procédé de gouvernance d'informations à base de politiques sécurisées, le procédé comprenant :
l'affichage (405) d'une interface utilisateur graphique, GUI (150), la GUI (150) recevant une entrée de règle commerciale provenant d'un utilisateur commercial (105) ;
la réception (410) d'une politique provenant d'un moteur de politiques sur la base de l'entrée de règle commerciale, le moteur de politiques générant une hiérarchie de politiques qui autorise la précédence d'opérations de politique, la hiérarchie de politiques autorisant le concept de garde-fous pour garantir que des actions de politique potentiellement dangereuses puissent être maîtrisées ;
la définition (415) d'une pluralité d'objets de domaine et d'une pluralité de représentations d'objets de domaine dans la GUI (150) sur la base de la politique et de la hiérarchie de politiques ;
la définition (420) d'une définition de modèle de domaine hiérarchique extensible à l'aide de la hiérarchie de politiques, la définition de modèle de domaine hiérarchique extensible étant modifiée à l'aide de la pluralité de représentations d'objets de domaine dans la GUI (150) ;
la définition (425) d'un point de mise en œuvre de politique, PEP (220), dans une application sur la base de la définition de modèle de domaine hiérarchique extensible ;
la fourniture (430) d'une mise en correspondance du PEP (220) dans l'application à la pluralité de représentations d'objets de domaine dans la GUI (150) ;
la réception (435), par le PEP (220), d'une requête d'utilisateur d'accéder à une ressource sur l'application, la requête d'utilisateur comprenant des attributs d'un utilisateur (105) ; et
la mise en œuvre (455), par le PEP (220), d'une décision concernant la requête d'utilisateur d'accéder à la ressource sur l'application.

2. Procédé selon la revendication 1, comprenant en outre :
l'envoi (440), par le PEP (220), de la requête d'utilisateur d'accéder à la ressource sur l'application vers un point de prise de décision de politique, PDP ;
l'évaluation (445), par le PDP, de la requête d'utilisateur d'accéder à la ressource sur l'application, l'évaluation (445) utilisant la définition de modèle de domaine hiérarchique extensible ; et
la génération (450), par le PDP, de la décision concernant la requête d'utilisateur d'accéder à la ressource sur l'application sur la base de l'évaluation (445).

3. Procédé selon la revendication 2, dans lequel l'évaluation (445), par le PDP, de la requête d'utilisateur d'accéder à la ressource comprend en outre :
l'envoi, par le PDP, d'une requête d'évaluation d'attribut concernant les attributs de l'utilisateur (105) vers un point d'informations de politique, PIP ;
l'évaluation, à l'aide du PIP, des attributs de l'utilisateur (105), l'évaluation utilisant la définition de modèle de domaine hiérarchique extensible ; et
le fait de répondre, par le PIP, à la requête d'évaluation d'attribut sur la base de l'évaluation, à l'aide du PIP, des attributs de l'utilisateur (105).

4. Procédé selon la revendication 3, dans lequel l'évaluation, à l'aide du PIP, des attributs de l'utilisateur (105) comprend l'utilisation d'au moins l'un parmi un gabarit de modèle de décision, un gabarit de table de décision et un domaine.

5. Procédé selon la revendication 4, dans lequel l'évaluation, à l'aide du PIP, des attributs de l'utilisateur (105) comprend l'utilisation du gabarit de table de décision, le gabarit de table de décision comprenant :
des informations pour la présentation du gabarit de table de décision à l'utilisateur commercial (105) à l'aide de la GUI (150) ;
des attributs de la pluralité d'objets de domaine ; et
le formatage des attributs de la pluralité d'objets de domaine pour un affichage sur la GUI (150).

6. Procédé selon l'une quelconque des revendications 3 à 5, comprenant en outre la génération d'un modèle de domaine personnalisé ;
dans lequel l'évaluation, à l'aide du PIP, des attributs de l'utilisateur (105) comprend l'utilisation du modèle de domaine personnalisé.

7. Procédé selon l'une quelconque des revendications précédentes, dans lequel la GUI (150) comprend en outre un écran de concepteur de politique pour l'utilisateur commercial (105).

8. Procédé selon la revendication 7, dans lequel l'écran de concepteur de politique est configuré pour recevoir une entrée de désactivation de point de mise en œuvre de politique, l'entrée de désactivation de point de mise en œuvre de politique désactivant le PEP (220) ce qui empêche le PEP (220) de mettre en œuvre la politique.

9. Procédé selon la revendication 7 ou 8, dans lequel l'écran de concepteur de politique est configuré pour recevoir une entrée d'activation de point de mise en œuvre de politique, l'entrée d'activation de point de mise en œuvre de politique activant le PEP (220) ce qui autorise le PEP (220) à mettre en œuvre la politique.

10. Procédé selon l'une quelconque des revendications précédentes,
dans lequel la décision concernant la requête d'utilisateur d'accéder à la ressource sur l'application est de refuser l'accès à la ressource sur la base de la politique ; et
dans lequel la mise en œuvre (455), par le PEP (220), de la décision concernant la requête d'utilisateur d'accéder à la ressource est de refuser l'accès à la ressource sur l'application.

11. Procédé selon l'une quelconque des revendications précédentes,
dans lequel la décision concernant la requête d'utilisateur d'accéder à la ressource sur l'application est d'accorder l'accès à la ressource sur la base de la politique ; et
dans lequel la mise en œuvre (455), par le PEP (220), de la décision concernant la requête d'utilisateur d'accéder à la ressource sur l'application est d'accorder l'accès à la ressource sur l'application.

12. Système d'ordinateur comprenant un ou plusieurs processeurs (5) configurés pour réaliser le procédé selon l'une quelconque des revendications 1 à 11.

13. Système d'ordinateur selon la revendication 12, le système (1) comprenant en outre la GUI (150), et le moteur de politiques.

14. Programme d'ordinateur comprenant des instructions (55) qui, lorsque le programme est exécuté par un système d'ordinateur (1), amènent le système d'ordinateur (1) à mettre en œuvre le procédé selon l'une quelconque des revendications 1 à 11.

15. Support lisible par ordinateur comprenant des instructions (55) qui, lors de leur exécution par un système d'ordinateur (1), amènent le système d'ordinateur (1) à réaliser le procédé selon l'une quelconque des revendications 1 à 11.
